# EUROPÄISCHE PATENTSCHRIFT

(11) **EP 1 044 844 B1**
(45) Veröffentlichungstag und Bekanntmachung des Hinweises auf die Patenterteilung: **20.10.2004**
(21) Anmeldenummer: 00105456.8
(22) Anmeldetag: 15.03.2000
(51) Int. Cl.: B60N 2/48

(54) **Vorrichtung zum Justieren einer Fahrzeugkopfstütze sowie ein Verfahren unter Verwendung einer derartigen Vorrichtung**
Device for adjusting a vehicle head rest and a method making use of such a device
Dispositif pour régler un appuie-tête de véhicule ainsi qu'un procédé utilisant un tel dispositif

(30) Priorität: 14.04.1999 DE 19916804
(43) Veröffentlichungstag der Anmeldung: 18.10.2000
(73) Patentinhaber: Bayerische Motoren Werke Aktiengesellschaft, 80809 München (DE)
(72) Erfinder: Eisenmann, Lutz, 85256 Vierkirchen (DE); Lu, Yan, Dr., 85356 Freising (DE)

(56) Entgegenhaltungen:
- DE-A- 3 427 466
- DE-A- 3 730 210
- DE-C- 19 651 670
- US-A- 4 796 013
- US-A- 5 848 661
- PATENT ABSTRACTS OF JAPAN vol. 1999, no. 11, 30. September 1999 (1999-09-30) -& JP 11 169258 A (AISIN SEIKI CO LTD), 29. Juni 1999 (1999-06-29)

## Beschreibung

Die Erfindung bezieht sich auf eine Vorrichtung zum Justieren einer Fahrzeug-Kopfstütze sowie ein Verfahren unter Verwendung einer derartigen Vorrichtung.

Eine derartige Vorrichtung und ein derartiges Verfahren sind aus der DE 34 27 466 A bekannt. Dabei ist ein pyroelektrischer Detektor, der auf die Wärmestrahlung des Fahrgast-Kopfes anspricht, etwa an der höchsten Stelle der Kopfstütze angeordnet. Ausgehend von einer Ruhelage mit eingefahrener Kopfstütze empfängt der Detektor die Wärmestrahlung des Kopfes und fährt solange nach oben, bis er keine Wärmestrahlung mehr erhält. Er befindet sich dabei etwa auf gleicher Höhe wie der Scheitel des Fahrgastes. Durch eine entsprechende Anordnung empfängt er in dieser Lage keine Wärmestrahlung mehr. Die Kopfstütze soll damit richtig justiert sein. Es ist ohne weiteres zu erkennen, daß eine derartige Vorrichtung äußerst ungenau ist und eine exakte und für das ordnungsgemäße Funktionieren der Kopfstütze unumgängliche richtige Einstellung der Kopfstützen-Höhenlage nicht gewährleistet.

Eine gattungsgemäße Vorrichtung und ein gattungsgemäßes Verfahren zur Justierung einer Kopftstütze ist aus der JP 11/69258 A bekannt.

Als Sensor wird ein Kondensator in der Kopfstütze benutzt, mit welchen ein Motor zur Justierung der Koptfstütze gesteuert wird. Der Kondensator umfaßt zwei Kondensatorplatten, die nebeneinander angeordnet sind.

Der Erfindung liegt die Aufgabe zugrunde, eine Vorrichtung der eingangs genannten Art zu schaffen, bei der mit geringem Aufwand eine exakte Justierung der Kopfstütze möglich ist sowie ein Verfahren für eine derartige Vorrichtung anzugeben, mit dem diese Justierung durchgeführt wird.

Die Erfindung löst diese Aufgabe für die Vorrichtungsmerkmale mit den Merkmalen des Patentanspruchs 1, für die Verfahrensmerkmale mit denen des Patentanspruchs 4.

Der besondere Vorteil der erfindungsgemäßen Vorrichtung besteht in der Unempfindlichkeit gegenüber dem Abstand des Kopfes von der Kopfstütze. Auch wenn der Kopf nicht auf der Kopfstütze aufliegt, ist das von den beiden Kondensatorplatten gelieferte Signal in seiner Relation gleichbleibend. Aufgrund der einfachen und kostengünstigen Bauweise sowie einer weitgehenden Temperaturunempfindlichkeit ergibt sich eine robuste und zuverlässige Vorrichtung zum Einstellen der Kopfstützen-Höhenlage.

Die Verwendung zweier Kondensatorplatten in Verbindung mit einem Fahrzeugsitz ist an sich bekannt. So werden in der US 4,796,013 die beiden Kondensatorplatten im Sitz- oder Lehnenteil und benachbart zum jeweiligen Objekt (Fahrgast) angeordnet. Damit wird erkannt, ob der Sitz belegt ist und ggf. Sicherheitseinrichtungen wie Airbag und dgl. nur dann ausgelöst, wenn dies tatsächlich der Fall ist.

Vorteilhafte Ausgestaltungen der Erfindung sind Gegenstand der weiteren Patentansprüche und werden anhand von in der Zeichnung dargestellten Ausführungsbeispielen näher erläutert.

Es zeigt
- Fig. 1: den prinzipiellen Aufbau einer erfindungsgemäßen Vorrichtung zur Justierung einer Fahrzeug-Kopfstütze,
- Fig. 2: ein Diagramm zur Erläuterung der Wirkungsweise und der Ausführung des erfindungsgemäßen Verfahrens und
- Fig. 3: ein weiteres Diagramm zur Erläuterung der Wirkungsweise einer alternativen Ausführungsform.

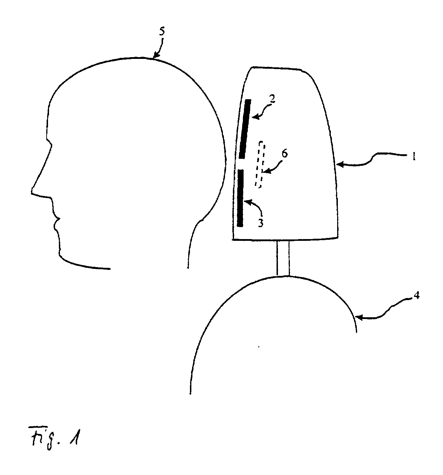

Beim Ausführungsbeispiel von Fig. 1, bei dem eine erfindungsgemäße Vorrichtung im Schnitt gezeigt ist, befinden sich in einer Kopfstütze 1 zwei Kondensatorplatten 2 und 3. Die Kopfstütze ist über einen elektromotorischen Antrieb (nicht dargestellt) relativ zu einer Lehne 4 eines Fahrzeugsitzes verfahrbar. Dabei soll die Höhenlage so eingestellt werden, daß die Kopfstütze optimal auf die Kopflage eines Fahrgastes 5 ausgerichtet ist.

Der Kopf 5 wirkt als Dielektrikum. Werden die beiden Elektroden 2 und 3 gleichphasig erregt, so liefern sie ein Ausgangssignal, das im Vergleich mit dem Ausgangssignal der anderen Kondensatorplatte bei der optimalen Höhenlage der Kopfstütze 1 ein charakteristisches Verhalten zeigt.

Ausgehend von einer Anordnung der Kopfstütze, bei der sie eingefahren ist und mit ihrer Unterkante auf der Oberkante der Lehne 4 aufsitzt, nimmt das Ausgangssignal der Kondensatorplatte 2 mit zunehmender Höhe zu, um nach Überschreiten des minimalen Abstands wieder abzunehmen. Gleichzeitig nimmt das Sensorsignal der Kondensatorplatte 3 zunächst ebenfalls zu. Aus dem Vergleich der beiden Sensorsignale läßt sich damit die optimale Einstellung der Kopfstütze 1 feststellen. Im ldealfall ist bei entsprechender geometrischer Ausgestaltung und Anordnung der beiden Kondensatorplatten das Sensorsignal bei der optimalen Einstellung der Nakkenstütze, wie in Fig.1 dargestellt, in etwa gleich.

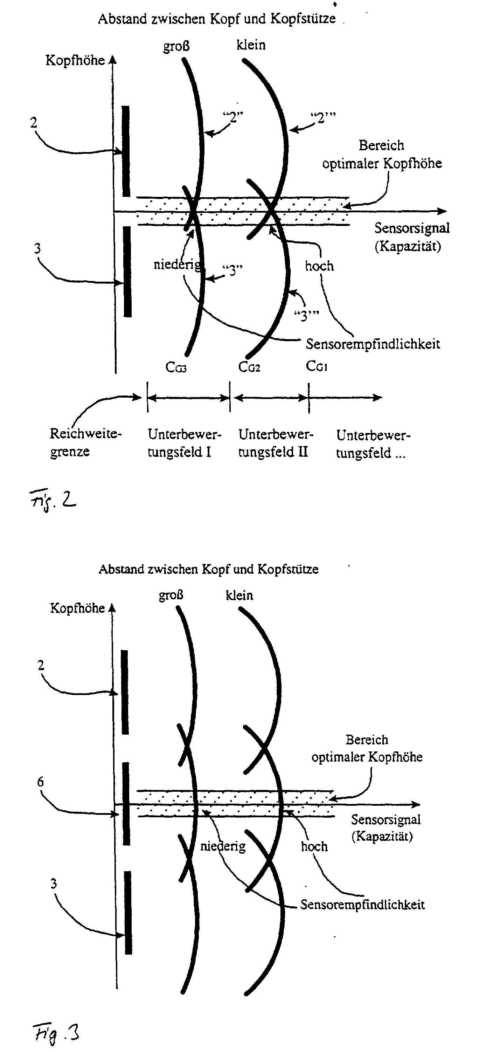

Der Verlauf der Sensorsignale ist in Fig. 2 dargestellt. Dabei sind zwei Fälle voneinander unterschieden. Im ersten Fall, der mit 2" und 3" bezeichnet ist, befindet sich der Kopf 5 in einem relativ großen Abstand von der Kopfstütze 1. Die Sensorsignale, dargestellt durch ihre Amplituden, zeigen den beschriebenen Verlauf.

Beim anderen, mit "2'" und "3'" bezeichneten Fall, befindet sich derKopf 5 in unmittelbarer Nähe der Kopfstütze 1. Die Amplituden sind wesentlich größer als im zuvor betrachteten Fall. Für beide Fälle gilt jedoch, daß die Sensorsignale den beschriebenen Verlauf besitzen. Im Idealfall für die Einstellung der Kopfstütze sind die Sensorsignale beide gleich. Damit läßt sich die Kopfstütze 1 in einfacher Weise an die jeweilige Kopflage des Fahrzeugbenutzers anpassen.

Bei dem in Fig. 3 anhand des Verlaufs der Sensorsignale dargestellten Ausführungsbeispiel befindet sich zwischen den Kondensatorplatten 2 und 3 eine weitere Kondensatorplatte, die mit 6 bezeichnet und in Fig. 1 strichliert eingezeichnet ist. Das Signal dieser Kondensatorplatte befindet sich in seinem Verlauf genau zwischen dem Verlauf der Kondensatorplatten 2 und 3 und besitzt bei der idealen Lageeinstellung der Kopfstütze ein Maximum. Bei dieser Anordnung kann der Vergleich der Sensorsignale der drei Kondensatorplatten oder aber durch Vergleich von nur zwei Kondensatorplatten 2, 6, 3, 6 oder aber auch, wie in Fig. 1 dargestellt, 2,3 die optimale Höhenlage der Nackenstütze detektiert werden.

In jedem Fall handelt es sich um einen Sensor, der temperaturunempfindlich ist und eine exakte Einstellung der Kopfstütze ermöglicht.

## Patentansprüche

1. Vorrichtung zur Justierung einer Fahrzeug-Kopfstütze in bezug auf die Kopflage eines Fahrgastes, mit einem in der Kopfstütze angeordneten Sensor zum Erkennen der Kopflage, **dadurch gekennzeichnet, daß** der Sensor zwei Kondensatorplatten (2,3) enthält, die übereinander angeordnet sind und die Teil eines Kondensators sind, in dem der Kopf des Fahrgastes als Dielektrikum wirkt.

2. Vorrichtung nach Anspruch 1, **dadurch gekennzeichnet, daß** die Anordnung und Größe der beiden Kondensatorplatten derart gewählt ist, daß das von beiden abgegebene Signal bei richtiger Justierung der Kopfstütze gleich ist.

3. Vorrichtung nach Anspruch 1 oder 2, **dadurch gekennzeichnet, daß** zwischen beiden Kondensatorplatten eine dritte Kondensatorplatte (6) angeordnet ist.

4. Verfahren zum Justieren einer Fahrzeug-Kopfstütze mit einer Vorrichtung gemäß den Patentansprüchen 1 bis 3, **dadurch gekennzeichnet, daß** die Höhenlage ausgehend von einer Ruhetage mit eingefahrener Kopfstütze soweit verändert wird, daß die Zunahme des Sensorsignals der einen Kondensatorplatte gleichzeitig mit der Abnahme des Sensorsignals der anderen Kondensatorplatte erfolgt.

5. Verfahren nach Anspruch 4, **dadurch gekennzeichnet, daß** die Kondensatorplatten gleichphasig erregt werden.

## Claims

1. A device for adjusting a vehicle head restraint with respect to the position of a passenger's head, comprising a sensor arranged in the head restraint to recognise the position of the head, **characterised in that** the sensor contains two capacitor plates (2, 3) which are arranged one above the other and are part of a capacitor in which the passenger's head acts as a dielectric.

2. A device according to claim 1, **characterised in that** the arrangement and size of the two capacitor plates are selected such that the signal emitted by both is the same when the head restraint is correctly adjusted.

3. A device according to claim 1 or 2, **characterised in that** a third capacitor plate (6) is arranged between the two capacitor plates.

4. A method for adjusting a vehicle head restraint comprising a device according to claims 1 to 3, **characterised in that**, starting from a rest position with the head restraint retracted, the height position is changed to such an extent that the increase in the sensor signal of the one capacitor plate takes place simultaneously with the decrease in the sensor signal of the other capacitor plate.

5. A method according to claim 4, **characterised in that** the capacitor plates are excited co-phasally.

## Revendications

1. Dispositif pour l'ajustement d'un appuie-tête de véhicule par rapport à la position de tête d'un passager, comportant un capteur disposé à l'intérieur de l'appuie-tête et qui permet de reconnaître la position de la tête,
**caractérisé en ce que**
le capteur contient deux plaques de condensateur (2, 3) disposées l'une au-dessus de l'autre et faisant partie d'un condensateur pour lequel la tête du passager fait fonction de diélectrique.

2. Dispositif selon la revendication 1,
**caractérisé en ce que**
la disposition et la taille des deux plaques de condensateur sont choisies de telle manière que le signal émis par les deux plaques est le même lorsque l'appuie-tête est ajusté correctement.

3. Disposition selon la revendication 1 ou 2,
**caractérisé en ce qu'**
entre les deux plaques de condensateur, est disposée une troisième plaque de condensateur (6).

4. Procédé pour l'ajustement d'un appuie-tête pour véhicule à l'aide d'un dispositif conforme aux revendications 1 à 3,
**caractérisé en ce que**
la hauteur, en partant d'une position de repos où l'appuie-tête est rentré, varie suffisamment pour que l'accroissement du signal de capteur de l'une des plaques de condensateur s'effectue en même temps que la décroissance du signal de capteur de l'autre plaque de condensateur.

5. Dispositif selon la revendication 4,
**caractérisé en ce que**
les plaques de condensateur sont excitées en phase.
